**Europäisches Patentamt**

**European Patent Office**

**Office européen des brevets**

(11) Publication number: **0 023 687**
**A2**

# EUROPEAN PATENT APPLICATION

(21) Application number: **80104411.6**

(22) Date of filing: **26.07.80**

(51) Int. Cl.³: **A 63 F 1/02,** G 09 B 23/24

(30) Priority: **02.08.79 IT 4009479**

(43) Date of publication of application: **11.02.81**
**Bulletin 81/6**

(84) Designated Contracting States: **CH DE FR GB LI**

(71) Applicant: **Zanasi, Alma, Via Andreoli 40, I-41100 Modena (IT)**

(72) Inventor: **Zanasi, Alma, Via Andreoli 40, I-41100 Modena (IT)**

(74) Representative: **Gardi, Giuliano, Palazzo Prora Via Giardini, 605, I-41100 Modena (IT)**

(54) Educational game of cards based on chemistry.

(57) An educational game of cards based on chemistry is realized by two packs of cards on which fancy images and symbols representing chemical elements with their valences and atomic weights are printed.

The cards of one pack refer to metals and oxygen, the cards of the other pack refer to non-metals, or metalloids, and oxygen.

The game consists in joining together groups of cards of the one or of the other pack, so that these combinations represent the formation of molecules according to the laws of chemistry, on the base of the elements and their valences.

Educational game of cards based on chemistry

The invention concerns an educational game of cards based on chemistry, that is to say a game of cards, which besides being amusing, allows to learn some rules and notions of chemistry and to exercise oneself in it: this being particularly instructive - to give a not limiting example - for students of secondary schools or for those in general, who are interested in chemistry. The prior state of art does not comprise games of cards based on knowledge of chemistry, but only games of cards for mere amusement, such as bridge, whist, canasta, rummy and others. This prior state of art is liable of interventions to increase and improve the availability of games of cards, which besides being a simple pas-time, can help with the instruction of person and particularly of youngsters in the domain of those subject, which are part of their studies, this in order to give the youngsters a pleasant approach to the study of chemistry. From the aforesaid derives the need to solve the technical problem of transforming the subject of study or part of it, in this case chemistry, into a pleasant card game.

The invention solves the above said technical problem by adopting :

- the graphic representation of a certain number of chemical elements chosen among the most representative ones by means of images, preferably fancy images, each on a card of suitable size and consistency for practising the game and moreover bearing the corresponding chemical symbol at the corners as well as the valence and the atomic weight;

- the division of the cards into two packs of different colour, one (called pack of metals) comprising metals and oxygen and having on its back the mark +, the other one (called pack of non-metals or metalloids) comprising non-metals and oxygen and having on its back the mark -;

- fancy images showing aspects or properties of the corresponding chemical elements;

- in the case of metals the height of the images proportional to the corresponding atomic weight;

- in all cards a fancy representation of the valences, also indicated with a number in the middle of the upper edge;

- a method of playing consisting in the use of the card pack of metals to form groups of cards representing oxide molecules and in the use of the non-metals or metalloid card pack to form anhydride molecules : this according to the rules of chemistry;

- at the moment of closing each phase of the game a positive or negative marking to be added up algebrically at the end of the game in order to determine the winner;

- the possibility for the player to choose among different combinations of cards at the aim of forming the molecules most suitable to reach a high positive marking and thus win the game. This invention, of course, can be used also to teach the chemistry to blind persons, by stamping the symbol in Braille code on the cards.

· he advantages obtained by this invention are: youngsters and players in general are dissuaded from non educational card games and gambling; a useful spare time pastime is offered as well as a formative mental exercise. A way of carrying out the invention is illustrated - just to give an example - in the twelve enclosed drawing tables, where all types of cards of the game are represented:

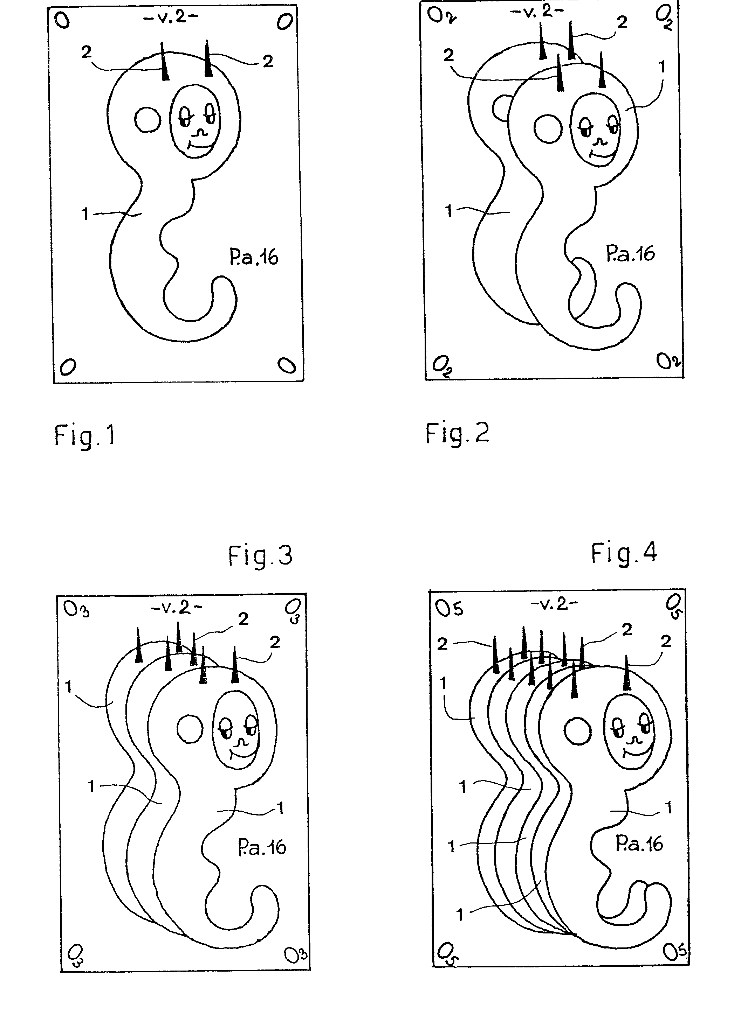

Figure 1 shows a card representing an oxygen atom materialized in the fancy image of a kind of gnome 1, which is to indicate a gaseous element rising towards the top in the centre, equipped with two feelers 2, indicating the valence repeated with the abb eviation - V 2 -; in the corners of the card the symbol "0" of oxygen and on the right side the corresponding value of the atomic weight indicated by P.a. (in this case P.a. 16); it is to be noted that in the card pack relating to the metals (seventy in number and having f.i. a red coloured back, marked with the mark +) there are eighteen cards of the same kind as Figure 1 with the gnome 1 f.i. coloured light blue, whereas in the card pack relating to the non-metals or metalloids (seventy in number and having f.i. a blue coloured back marked with the mark —) there are seven cards of the same type as in Figure 1 with the gnome 1 f.i. coloured yellow;

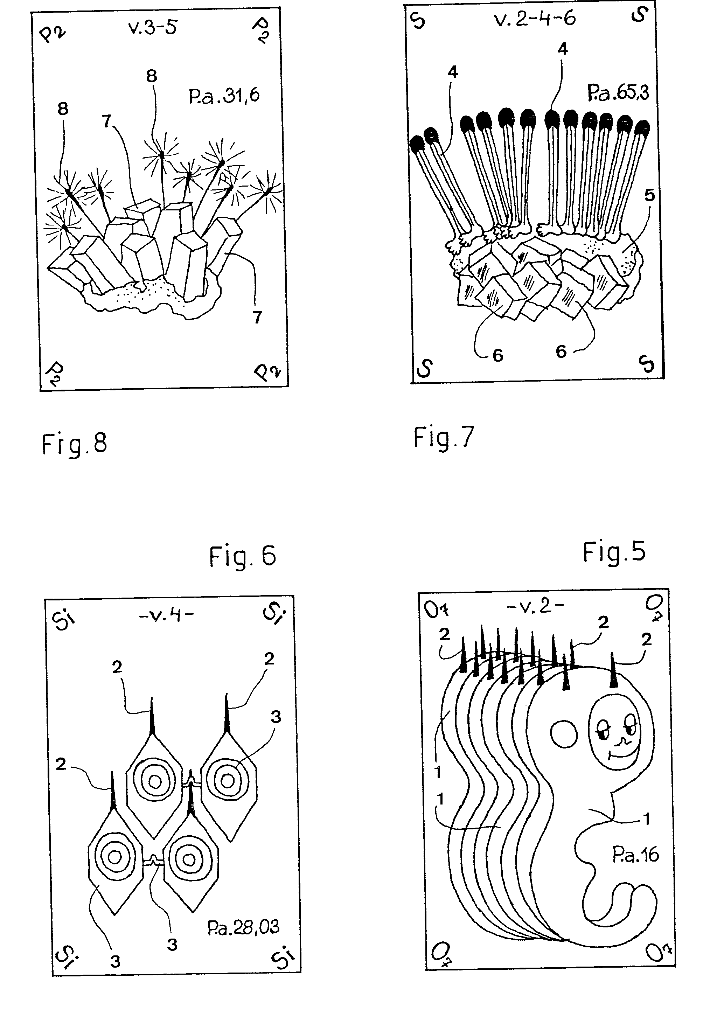

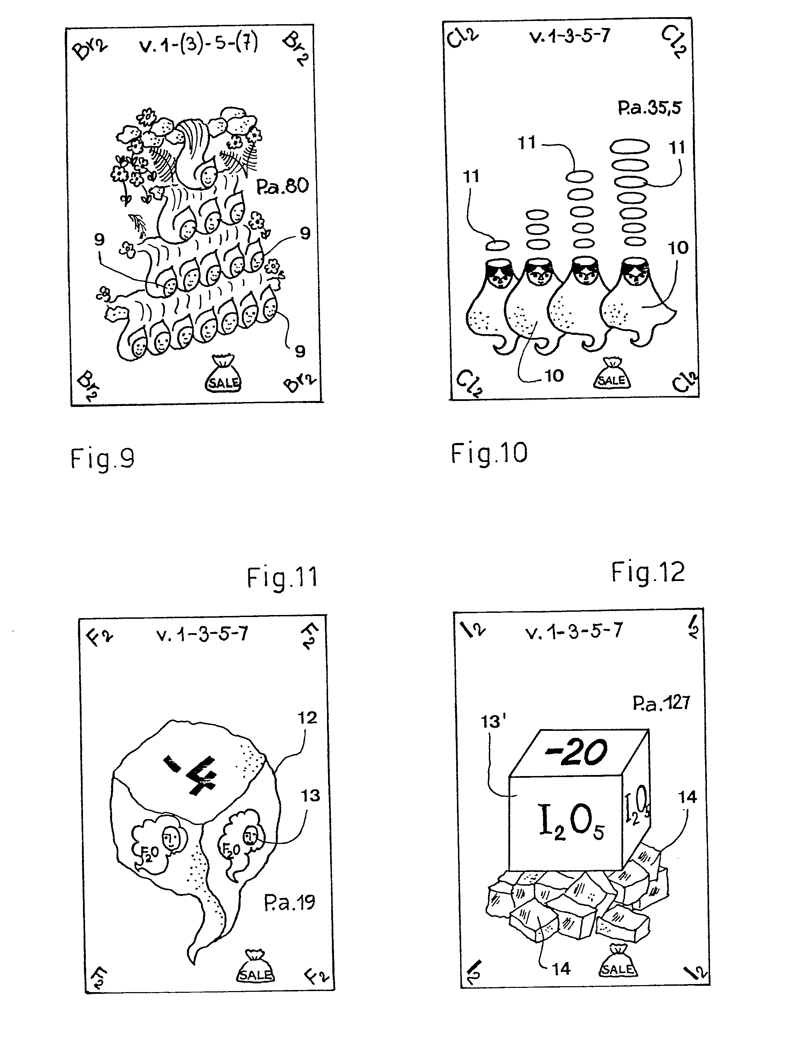

Figure 2 represents a card showing two oxygen atoms, analogously with Figure 1 materialised in the image of two gnomes 1 in part superimposed, each equipped with two feelers 2: symbol $O_2$ and valence - V.2.-; in the card pack of the metals there are nine cards of the same type as Figure 2(always f.i. with the gnomes in light blue), whereas in the non-metals or metalloid pack there are six cards of the same type as in Figure 2 (always f.i. with the gnomes in yellow); analogously, the Figures 3, 4, 5 represent respectively three, five, and seven bivalent oxygen atoms ($O_3$, $O_5$, $O_7$): in the metal pack there are five cards like that of figure 3, in the non-metals or metalloid pack there are nine of them; in the metal pack there are no cards like that of Figure 4, whereas in the non-metals or metalloid pack there are eight of them; in the metal pack as well as in the metalloid or non-metals pack there is one card like that of Figure 5; the pack of non-metals or metalloids is made up by the following cards described in the Figures 6 to 22 included: Figure 6 represents silicium (Si), symbolized by two pairs of fancy spectacles connected between each other (in order to recall glass based on silicium) with four feelers 2, which stand for the valence four: there is only one card like that of Figure 6 ; Figure 7 shows sulphur (S) by means of fancy matches 4 equipped with a human foot in groups of two, four and six in order to recall the valences: the feet of the matches rest on a rock 5 with crystals 6; there are altogether three cards like that of Figure 7; Figure 8 shows two phosphor atoms ($P_2$) by means of prismatic crystals 7, from which appear two groups of rockets 8, one of three, the other one of five rockets, in order to recall the two valences of phosphor: there are only two cards like that of Figure 8; Figure 9 represents two bromine atoms ($Br_2$), symboli-

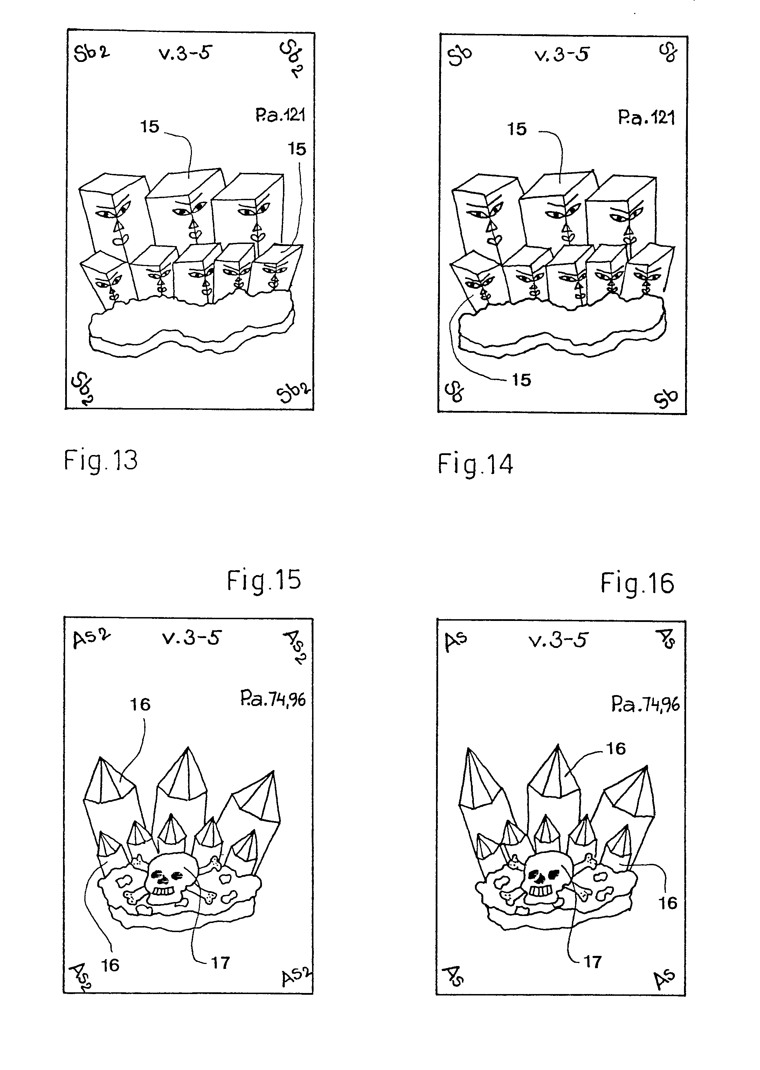

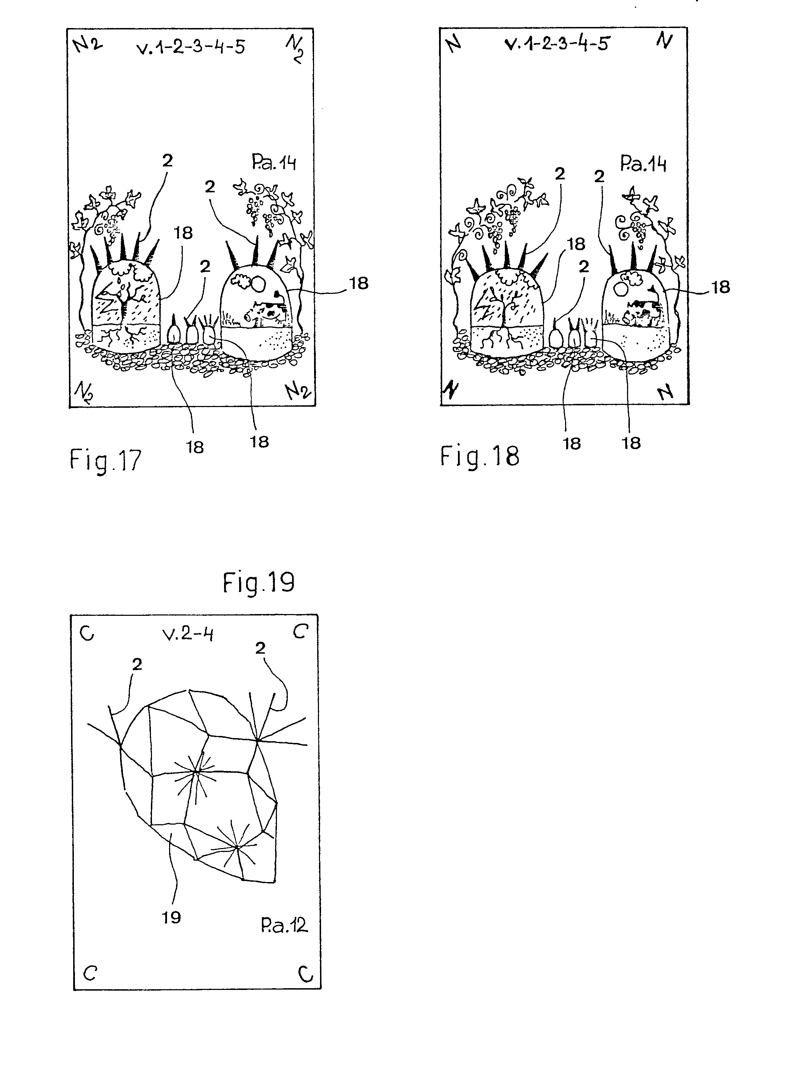

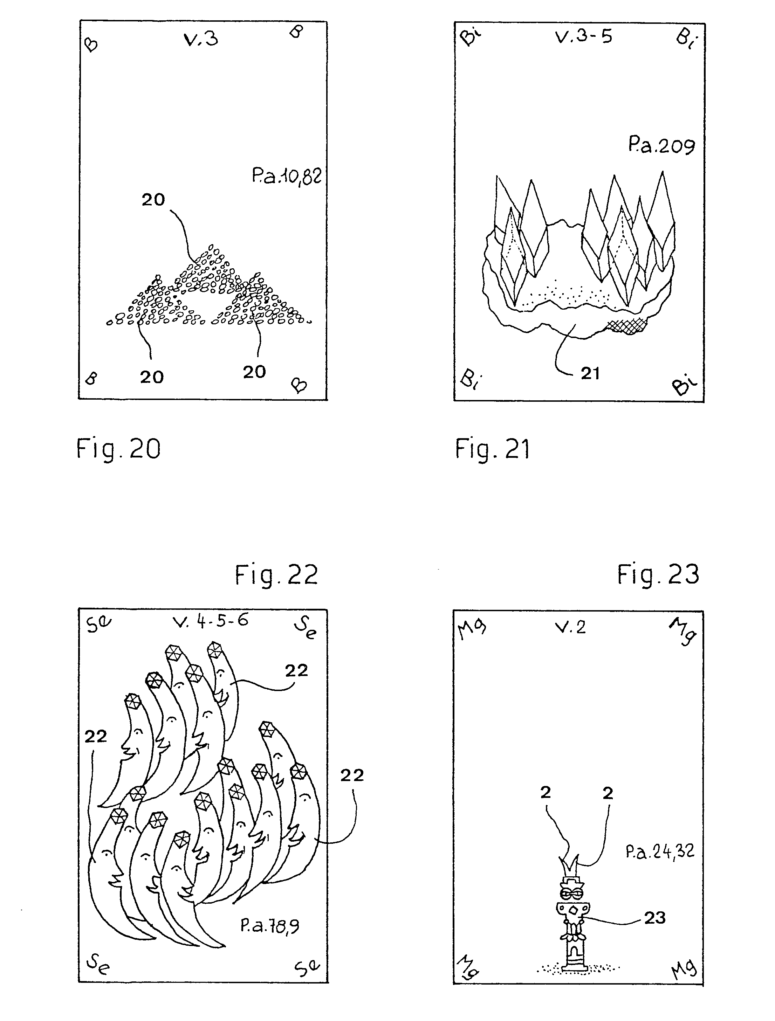

zed as a liquid by a fancy cascade framed by flowers, materialized in drops with human faces 9: the number of the faces at each of the four levels of the cascade is to indicate the valences (1 - 3 - 5 - 7): there are only two cards like that of Figure 9; the valences 3 and 7 indicated in brackets are of no use in the game; Figure 10 shows two chlorine atoms $(Cl_2)$ materialized in the shape of big bellied fancy gnomes 10 with aureoles above 11 stratified in order to indicate the valences 1 - 3 - 5 - 7; there are four cards of the same type as the one of Figure 10; Figure 11 represents a gaseous formation of two fluorine atoms $(F_2)$ (valences 1 - 3 - 5 - 7) materialized in an overturned pyramid tongue 12, on the sides of which that can be seen is shown a comic strip type face 13, which indicated a fluorine oxide molecule and on the base of which a negative marking (-4) is indicated, which is attributed, because fluorine reacts only with difficulty; there is only one card like that of Figure 11; Figure 12 represents two iodine atoms $(I_2)$ (valences 1 - 3 - 5 - 7) materialized in a cube 13 arranged on crystals 14: on the sides of the cube appears the formula $I_2O_5$ in order to recall the only existing compound with oxygen; on the top side of the cube appears the penalty (-20) of twenty points; there is only one such card; in the Figures 9, 10, 11, 12 there is also a bag of salt in order to recall that Br, Cl, F, I are halogens; Figure 13 represents an antimony atom $(Sb_2)$ materialized by two groups 15 of parallelepiped crystals with fancy human faces in order to recall the valences 3 and 5:there is only one such card; Figure 14 instead represents antimony by one atom only (Sb) : there are two such cards; the same thing as for antimony is true for arsenic $(As_2)$ with two atoms (Figure 15) and with one atom only (Figure 16): the arsenic is symboliz d by pencil point crystals 16 with a skull 17 at the base in order to indicate danger of life; there is one card like the one of Figure 15 and there are two cards like that of Figure 16; Figure 17 and 18 represent nitrogen respectively with two $(N_2)$ and only one atom (N): in order to recall the actions of nitrogen and the valences 1 - 2 - 3 - 4 - 5 transparent bells 18 with their respective feelers 2 are shown; under the big bell there is the cow, which manures the soil in order to make the vine grow, whereas under the other big bell there is a tree in a thunderstorm; there is one card like the one of Figure 17 and there are six like that of Figure 18; Figure 19 represents carbon (C) with valences 2 and 4, materialized in a diamond 19 having correspondingly two groups of rays 2, one of two and the other of four rays in order to recall the valences: there are two such cards; Figure 20 represents a boron atom (B) with valence 3 symbolized by three small heaps of crystals 20: there are two such cards; Figure 21 represents a bismuth atom (Bi) symbolized by a volcanic rock 21 with groups of three and five crystals in order to recall the valences (3 and 5): there are four such cards; Figure 22 represents selenium (Se) with groups of respectively four, five and six fancy moons 22: there are four such cards.

As for the cards of the metal pack most of them are represented by means of totems 23 with crowns having a number of points 2 that equals their valence according to the following indications:

Figure 23, magnesium (Mg), one card;

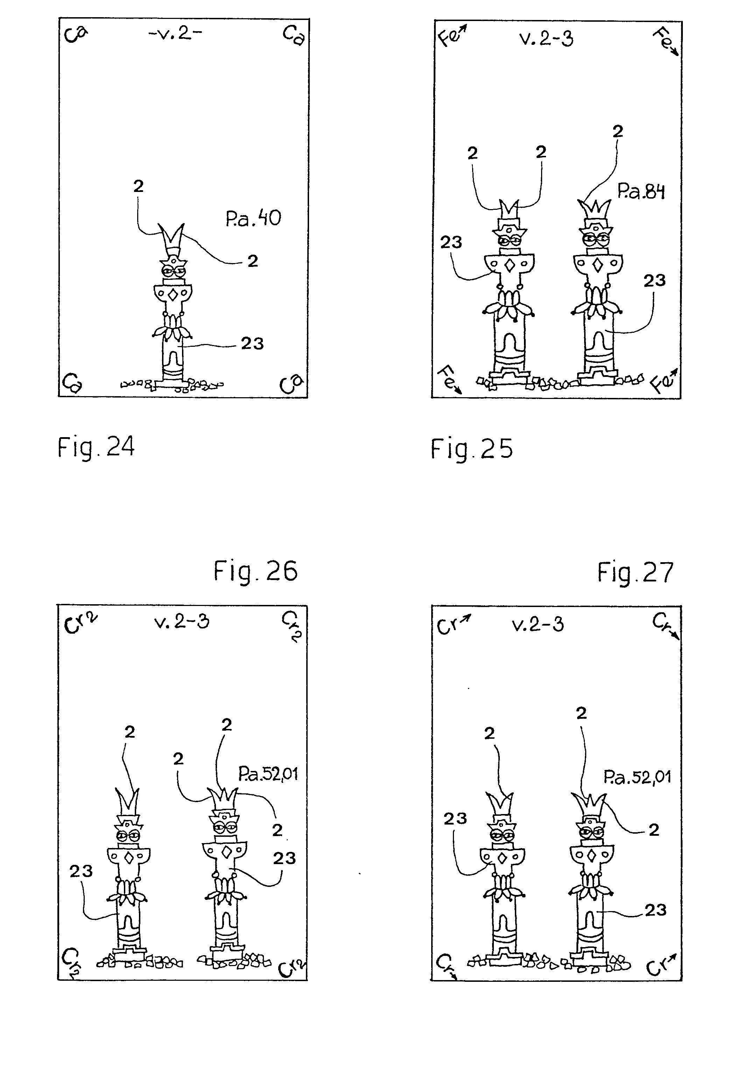

Figure 24, calcium (Ca), two cards;

Figure 25, iron (Fe), two cards;

Figure 26, chromium ($Cr_2$), one card;

Figure 27, chromium (Cr), one card;

Figure 28, manganese (Mn), two cards;

Figure 29, manganese ($Mn_2$), two cards;

Figure 30, lead (Pb), two cards;

Figure 32, silver ($Ag_2$), one card;

Figure 33, aluminium ($Al_2$), one card;

Figure 34, barium (Ba), two cards;

Figure 35, zinc (Zn), one card;

Figure 36, nickel (Ni), three cards;

Figure 38, copper (Cu), two cards;

Figure 39, tin (Sn), two cards;

Figure 40, sodium ($Na_2$), two cards;

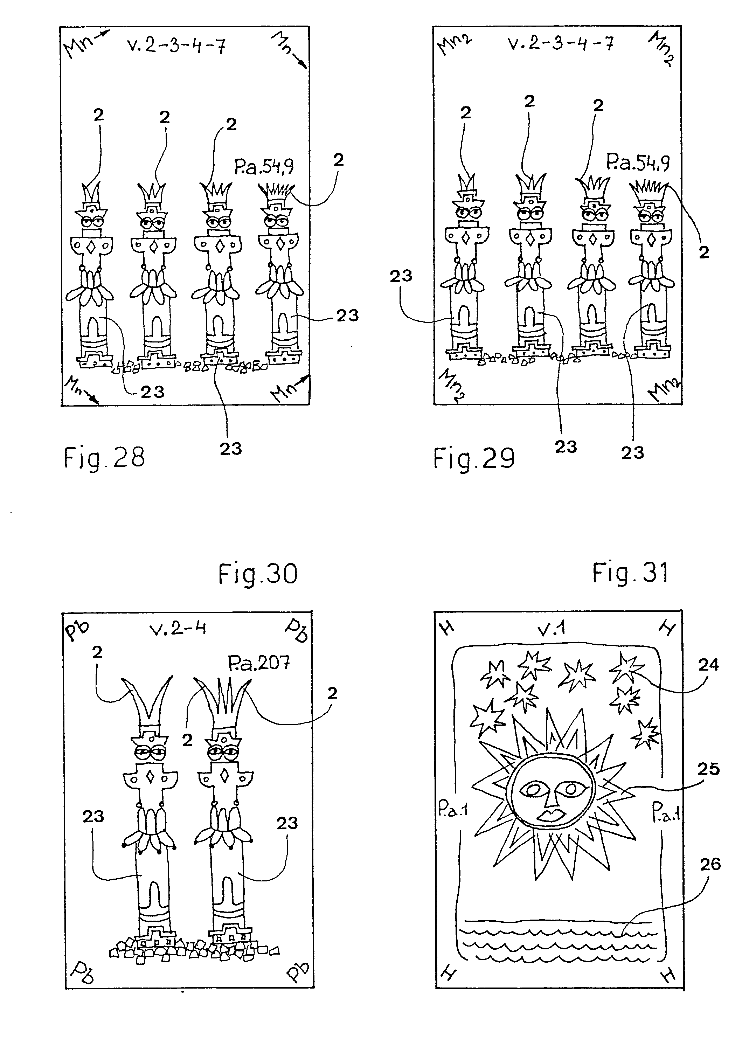

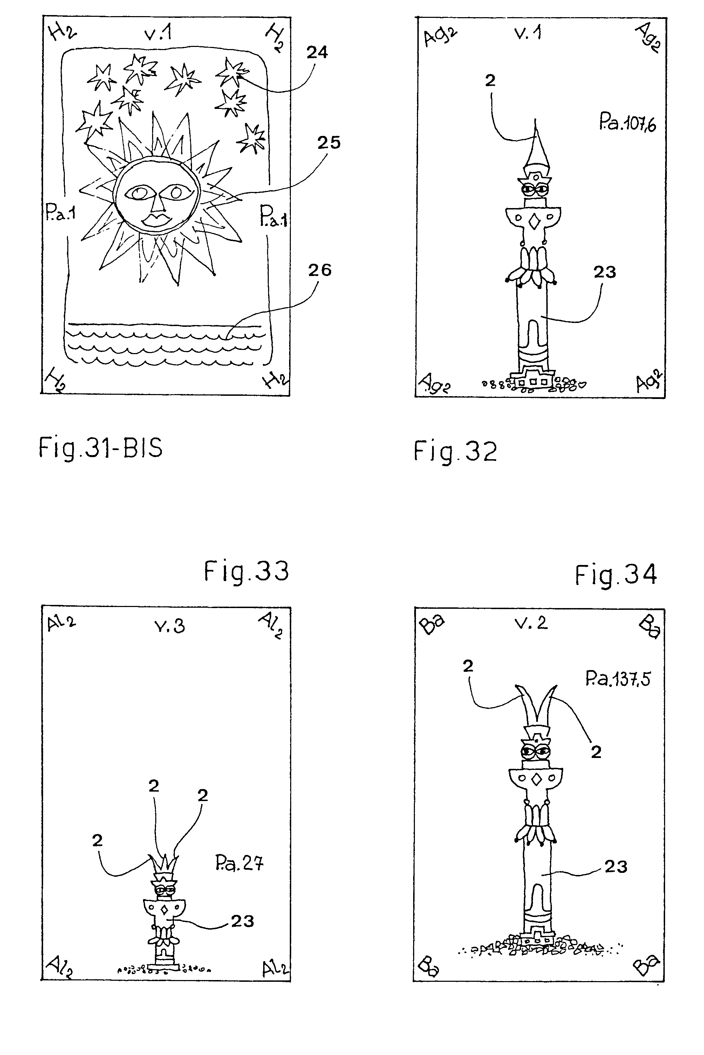

Figure 31 represents monatomic hydrogen (H) by means of the association of stars 24, the sun 25, and the sea 26: there are two such cards.

Figure 31 bis represents the hydrogen molecular ($H_2$): there is only one card.

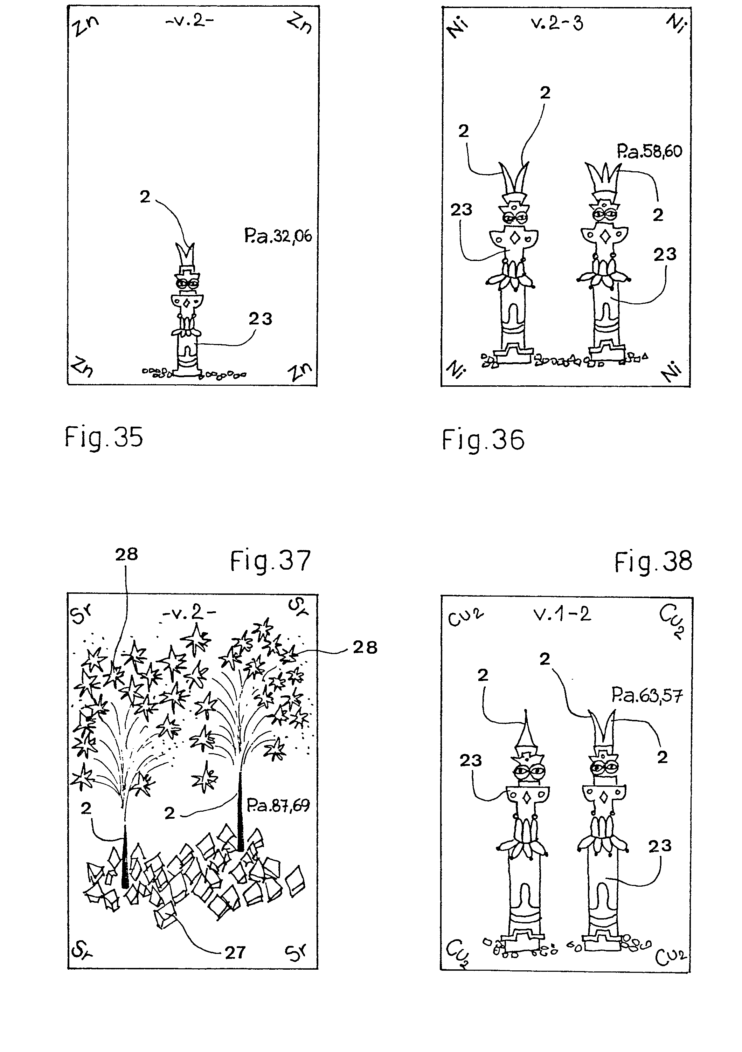

Figure 37 represents strontium (Sr) by means of crystals 27 and points 2 spurting fireworks 28: there are two such cards.

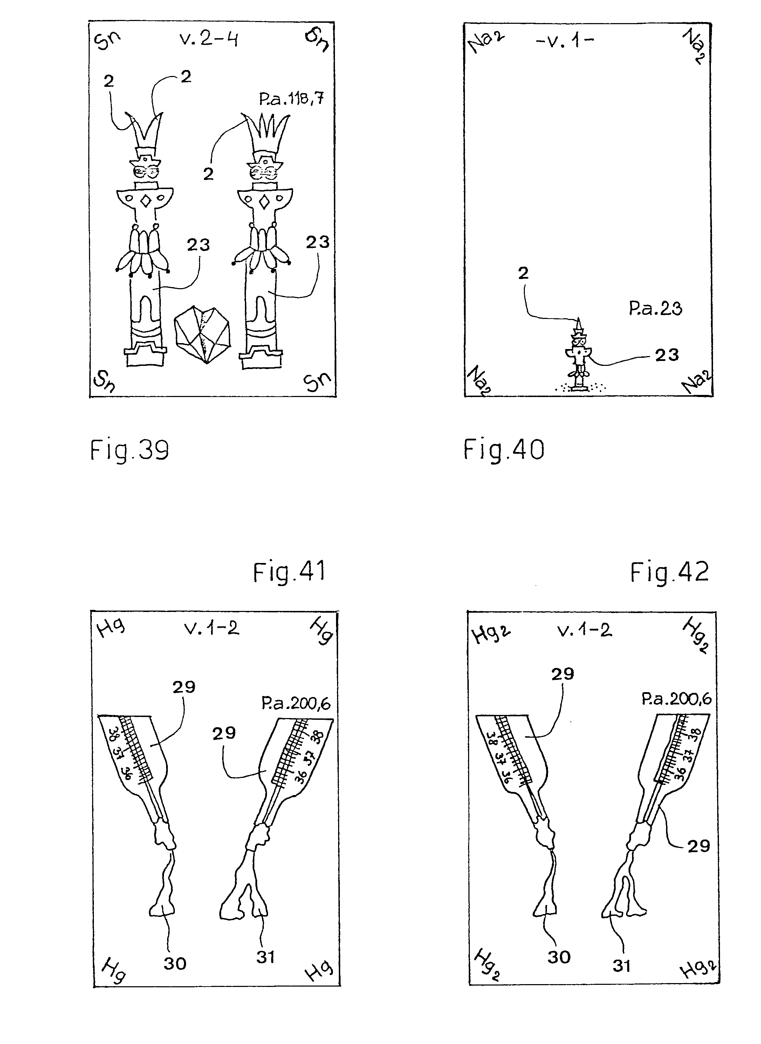

Figure 41 and 42 represent mercury (Hg, $Hg_2$) symbolized by two broken thermometers 29, from which flow respectively one drop 30 of mercury (valence 1) and two drops 31 (valence 2): there is one card for each of the two figures.

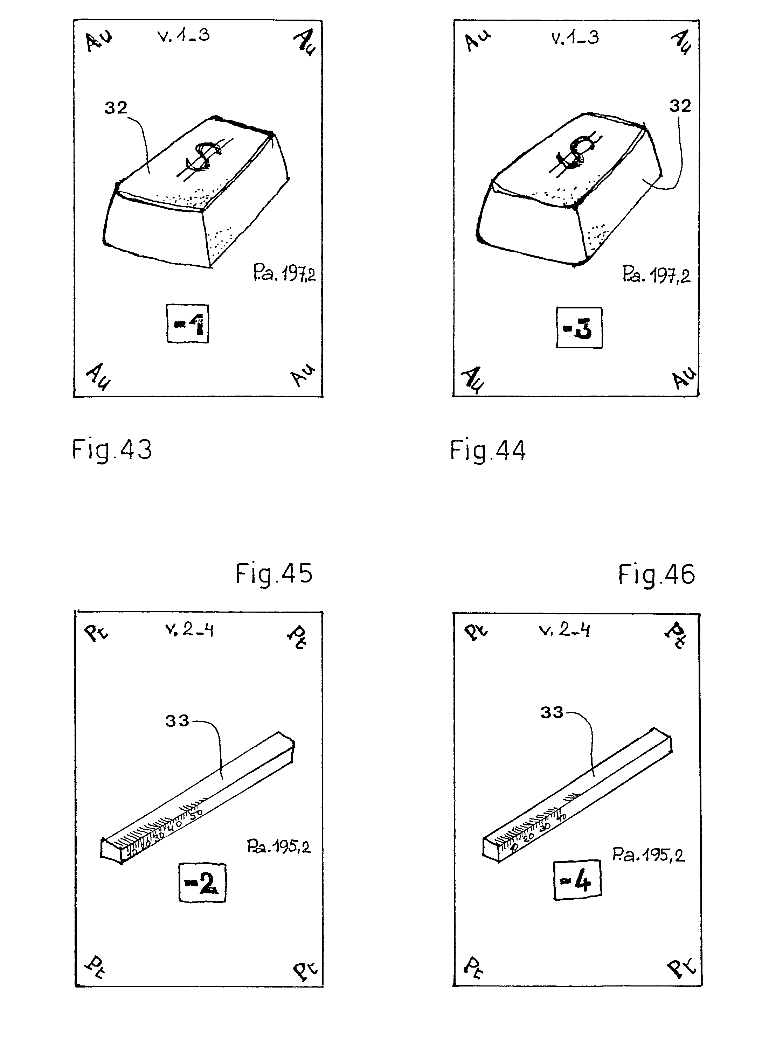

Figures 43, 44, 45, 46 represent: the first two gold (Au), the other two platinum (Pt); gold is shown by means of an ingot 32 with the dollar symbol ($) and with indication of respective penalties -1 and -3; platinum is symbolized by a scale 33 recalling the sample of the measuring unit with penalties of -2 and -4 respectively: each of these cards exists only once in the metal pack.

The cards representing hydrogen, barium, calcium, strontium and sodium can have their background coloured, (unlike the other cards of the metal pack which have a white background) to recall only said elements may form peroxides with oxygen.

The game is played as follows: once taken the metal card pack f.i. consisting of seventy cards thirty eight of which referring to nineteen metals and thirty two to oxygen, these are shuffled and cut and the dealer deals out the cards , still covered, to the players, five each, in a certain direction, placing the first of the cards not delt out uncovered beside the covered pack, this card forming the base of the uncovered card pack; the leading player may collect the uncovered card or take the first two cards from the pack, discarding one uncovererd from the whole he has got in his hands, but this cannot be a card with negative marking: thus for all other players; in order to obtain markings is necessary to lay down cards, which will form such oxides that the minimum opening marking of twelve is obtained, adding the number values of the pertinent valences: it is possible to lay down the opening or other oxydes during the following rouds, however without modifying the molecules already laid down, only in the order of the sense of the game, after having taken a card or cards before discarding; it is not possible to use more than one value of the valences of the same card representing a metal to form oxides whereas more than one oxygen card may be united at the same time in order to reach the necessary valence value to obtain the oxide; closing of the phase of the game with the metal card pack takes place when a player declares that he has finished laying all cards in his hands combined in oxides plus the possible cards with negative value down on the table before taking a card or cards: this in such a way that he need not to discard one single card; the player who closes receives a prize of +5 points to be added to the marking, deriving from the oxide molecules laid down on the table on the base of one point for each combined valence unit, deducted the negative values of those cards, which cannot contribute to the formation of molecules, these negative values being indicated on the cards themselves, whilst the other players receive a positive marking for the oxide molecules they previously laid down on the table and a negative marking for the cards still in their hands, considering the lowest value of the valence for each atom, as well as for the cards with negative markings indicated on them. Then the second phase of the game takes place with the same metal card pack, proceeding as before after having shuffled and cut the cards;finally a third phase of the game takes place in an analogous way with the metalloid or non-metal card pack(still of seventy cards, thirty nine of which referring to fourteen metalloids and thirty one to oxygen), bearing in mind that instead of oxides anhydrides are formed. The markings obtained by the single players during the three phases of the game, added up algebrically, define the winner of the game, that is the player, who obtained the highest number of markings. Alternatively, the game can be played with both card packs mixed together.

The positive markings obtainable by means of chemical combinations are thus determined according to the involved valences .

With the metal card pack:

Protoxides: (2 metal atoms + 1 oxygen atoms): $H_2O$; $Ag_2O$; $Cu_2O$; $Na_2O$; $Hg_2O$.

Four points for each protoxide.

Oxides (1 metal atom + 1 oxygen atom): BaO; CaO; CrO; CuO; FeO; MgO; MnO; PbO; SnO; SrO; HgO; NiO; ZnO.

Four points for each oxide.

Peroxides (1 metal atom + 2 oxygen atoms or 2 metal atoms + 2 oxygen atoms): $BaO_2$; $CaO_2$; $SrO_2$; $H_2O_2$; $Na_2O_2$; moreover ozone ($O_3$).

6 points for each peroxide and for ozone.

Dioxides (1 metal atom + 2 oxygen atoms) $MnO_2$; $PbO_2$; $SnO_2$.

8 points for each dioxide.

Sesquioxides (2 metal atoms + 3 oxygen atoms): $Al_2O_3$; $Cr_2O_3$; $Fe_2O_3$; $Mn_2O_3$; $Ni_2O_3$.

12 points for each sesquioxide.

Combination of two manganese atoms with seven oxygen atoms ($Mn_2O_7$) 28 points.

The metal pack makes it possible to form the following others combinations:

$Fe_2O_2$: equivalent to two molecules of ferrous oxide 2FeO
- points 8 - ;

$Cr_2O_2$: equivalent to two molecules of chromium oxide 2 CrO
- points 8 -;

$Cu_2O_2$: equivalent to two molecules of copper oxide 2 CuO
- Points 8 -;

$Hg_2O_2$: equivalent to two molecules of mercury oxide 2 HgO
- points 8 -;

$Mn_2O_2$: equivalent to two molecules of manganese oxide 2 MnO
- points 8 -;

$Mn_2O_4$: equivalent to two molecules of manganese dioxide 2 $MnO_2$ - points 16 -.

With the metalloid card pack

4 point anhydrides:

$N_2O$; $NO$; $CO$; $Br_2O$; $Cl_2O$; $SO$.

8 point anhydrides:

$NO_2$; $CO_2$; $SeO_2$; $SiO_2$; $SO_2$.

12 points anhydrides:

$Sb_2O_3$; $As_2O_3$; $Bi_2O_3$; $N_2O_3$; $Cl_2O_3$; $P_2O_3$; $B_2O_3$; $Se\,O_3$; $S\,O_3$.

20 points anhydrides:

$Sb_2O_5$; $As_2O_5$; $Bi_2O_5$; $N_2O_5$; $Br_2O_5$; $Cl_2O_5$; $P_2O_5$; $Se_2O_5$.

2 8 points anhydride:

$Cl_2\,O_7$.

It is possible to form also the following combinations:

$N_2O_4$: equivalent to two molecules of nitrose-nitric anhydride, 2 $NO_2$ - points 16 -;

$N_2O_2$: equivalent to two molecules of nitrogen oxide,2 NO - points 8 -;

$Se_2O_4$: equivalent to two molecules of selenious anhydride, 2 $SeO_2$ - points 16 -;

$Se_2O_6$: equivalent to two molecules of selenic anhydride, 2 $SeO_3$ - points 24 - .

The negative markings indicated on the cards of the metalloids pack are:

$Fe_2O$ -4 points, $I_2O_5$ -20 points.

The negative markings indicated on the cards of the metal pack are:

Au -1 point; Pt - 2 points

Au -3 points; Pt -4 points.

In the practical realization the material of the cards, the sizes, the execution details, the number of the cards and of the elements represented on them, the types of elements, the relative indications, the images chosen and printed on them, and the colours may be different from those indicated, but technically equivalent without leaving the juridical dominion of this invention; moreover the game may be played with variations of the smallest rules without changing the concept of the invention.

Claims

1. Educational game of cards based on chemistry, characterised by the fact that the images and symbols printed on the cards represent chemical elements with their relative valences and atomic weights: the combinations of cards valid for the positive markings being formed by joining two or more cards, which express according to the elements and the relative valences the forming of molecules according to the laws of chemistry.

2. Game of cards according to claim 1, characterized by the fact that fancy images are printed on the cards, representing aspects or properties or applications of the relative chemical elements: in particular the relative valences in addition to the numerical indication of same.

3. Game of cards according to claim 1, characterized by the fact that the cards are divided into two packs: one containing cards referring to non-metals or metalloids and oxygen and the other containing cards referring to metals and oxygen.

4. Game of cards according to claims 1 and 3, characterized by the fact that oxyde molecules are formed with the pack of the metals and anhydride molecules are formed with the metalloid card pack.

5. Game of cards according to claim 2, characterized by the fact that in said fancy images the valences are represented by feelers (2) or pointed or summit type elements placed at the top of the image or forming the profile of the image.

6. Game of cards according to claim 2, characterized by the fact, that the valences are represented by groups of fancy images in the same number as the valences, each consisting of a number of images equal to the value of the relative valence.

7. Game of cards according to claim 2, charecterized by the fact that the valences of the liquids are represented by as many groups of fancy drops as valences and by a number of drops for each group equal to the value of the relative valence.

8. Game of cards according to claim 2 characterized by the fact that the valences of gaseous elements are represented by means of aureoles (11), bubbles or comic strips (12).

9. Game of cards according to claim 2, characterized by the fact that the cards of chemical elements with poor tendency to combine with oxygen determine a negative marking indicated according to the value of the relative valences.

10. Games of cards according to claim 2, characterized by the fact that the cards of chemical elements with poor tendenci to combine with oxygen determine a negative marking according to the bonds of the molecule exceptionally formed with oxygen.

11. Game of cards according to claim 1, characterized by the fact that in the four corners of each card the chemical symbol of the represented element is printed, bearing the index 2 if there are two atoms, the index 3, if there are three atoms a.s.o.; there is no index in case of one atom only.

12. Game of cards according to claim 2, characterized by the fact that oxygen is represented by means of the image of a fancy gnome (1) or imp repeated in a perspective view until the number of the images obtained is equal to the number of atoms considered on the relative card.

13. Game of cards according to claim 2, characterized by the fact that the metals are represented by the image of one or more than one totem (23), the height of which is proportional to the atomic weight of the represented element.

14. Game of cards according to claim 2, characterized by the fact that crystalline elements are represented by one or more than one group of crystals.

15. Game of cards according to claim 2, characterized by the fact that Hydrogen is represented by means of a fancy image of the sun (25) in the sky full of stars (24) over the sea (26).

16. Game of cards according to claims 1 and 9, characterized by the fact that after dealing an equal number of cards to each player the dealer places the covered pack on the table and beside places the uncovered last of the cards not delt out: the leading player may take the uncovered card or the first two cards of the covered pack discarding in any case one card of those in his hands to be placed open beside the pack;the other players proceed in the same way; the cards with negative marking cannot be discarded.

17. Game of cards according to claims 1 and 9, characterized by the fact that in order to win the game it is necessaru to obtain a positive marking by laying down on the table the highest possible number of joint cards forming molecules with high markings without changing them later: the marking of a molecule being defined by the linked valences, which have the value of one point each; it is not possible to use the same card in order to form molecules of different substances.

18. Game of cards according to claim 17, characterized by the fact that - in order to acquire the right to obtain positive markings - the player must have placed on the table a number of cards corresponding to a previously established marking equal to the value of one or more than one molecule without changing its composition before discarding and all at once in order to close the game the player must have combined all the cards he possesses except the possible cards with negative markings so as to form molecules without taking cards and without discarding them: the player who closes the game has the right to receive a prize according to a previously established number of points.

19. Game of cards according to claim 18, characterized by the fact that upon closing by one player the others receive a positive marking according to the possible compounds already laid down and a negative marking according to the possible cards with negative markings and, moreover, according to all the other cards still in their hands considering all the atoms on the base of their lowest value; the markings obtained by each player during the phase of the game results from the algebric sum of the counted points; the game is won by the player who has reached the highest positive marking.

Fig.1

Fig.2

Fig.3

Fig.4

Fig.8

Fig.7

Fig. 6

Fig.5

Fig.9

Fig.10

Fig.11

Fig.12

Fig.13

Fig.14

Fig.15

Fig.16

Fig.17

Fig.18

Fig.19

Fig. 20

Fig. 21

Fig. 22

Fig. 23

0023687 7/12

Fig. 24

Fig. 25

Fig. 26

Fig. 27

Fig.28

v.2-3-4-7
P.a.54,9

Fig.29

v.2-3-4-7
P.a.54,9

Fig.30

v.2-4
P.a.207

Fig.31

v.1
P.a.1

Fig.31-BIS

Fig.32

Fig.33

Fig.34

Fig.35

Fig.36

Fig.37

Fig.38

Fig.39

Fig.40

Fig.41

Fig.42

Fig.43

Fig.44

Fig.45

Fig.46